# EUROPEAN PATENT APPLICATION

(11) **EP 4 471 591 A1**
(43) Date of publication of application: **04.12.2024**
(21) Application number: 23218028.1
(22) Date of filing: 19.12.2023
(51) Int. Cl.: G06F 9/50, G06F 11/34, H04L 41/5009, H04L 41/5025, H04L 43/08

(54) **NETWORK TELEMETRY-AWARE SCHEDULER**

(30) Priority: 30.05.2023 US 202318325760
(71) Applicant: Juniper Networks, Inc., Sunnyvale, CA 94089 (US)
(72) Inventor: BANKA, Tarun, Sunnyvale, 94089 (US); SRIDHAR, Thayumanavan, Sunnyvale, 94089 (US); YAVATKAR, Raj, Sunnyvale, 94089 (US)
(74) Representative: D Young & Co LLP

(57) **Abstract**

In general, techniques are described for deploying workloads of containerized services to worker nodes in a network using network telemetry-aware scheduling. In an example, a method comprises establishing, by a computing system, an application performance baseline for an application based on application performance data and network telemetry data; based on determining that application performance has degraded from the application performance baseline, identifying, by the computing system, a correlation between a placement of a workload of the application to a first worker node of a plurality of worker nodes and the application performance data; and based on identifying the correlation, re-scheduling, by the computing system, the workload to a second worker node of the plurality of worker nodes.

## Description

This application claims the benefit of US Patent Application No. 18/325,760, filed 30 May 2023, the entire contents of which is incorporated herein by reference.

### TECHNICAL FIELD

The disclosure relates to computing systems for executing and managing containerized applications.

### BACKGROUND

Computer networks have become ubiquitous and the number of network applications, network-connected devices, and types of network-connected devices are rapidly expanding. Such devices now include computers, smart phones, Internet-of-Things (IoT) devices, cars, medical devices factory equipment, etc. An end-user network-connected device typically cannot directly access a public network such as the Internet. Instead, an end-user network device establishes a network connection with an access network, and the access network communicates with a core network that is connected to one or more packet data networks (PDNs) offering services. There are several different types of access networks currently in use. Examples include Radio Access Networks (RANs) that are access networks for 3rd Generation Partnership Project (3GPP) networks, trusted and untrusted non-3GPP networks such as Wi-Fi or WiMAX networks, and fixed/wireline networks such as Digital Subscriber Line (DSL), Passive Optical Network (PON), and cable networks. The core network may be that of a mobile service provider network, such as a 3G, 4G/LTE, or 5G network.

In a typical cloud data center environment, there is a large collection of interconnected servers that provide computing and/or storage capacity to run various applications. For example, a data center may comprise a facility that hosts applications and services for subscribers, i.e., customers of data center. The data center may, for example, host all of the infrastructure equipment, such as networking and storage systems, redundant power supplies, and environmental controls. In a typical data center, clusters of storage systems and application servers are interconnected via high-speed switch fabric provided by one or more tiers of physical network switches and routers. More sophisticated data centers provide infrastructure spread throughout the world with subscriber support equipment located in various physical hosting facilities.

Virtualized data centers are becoming a core foundation of the modem information technology (IT) infrastructure. In particular, modern data centers have extensively utilized virtualized environments in which virtual hosts, also referred to herein as virtual execution elements, such virtual machines or containers, are deployed and executed on an underlying compute platform of physical computing devices.

Virtualization within a data center can provide several advantages. One advantage is that virtualization can provide significant improvements to efficiency. As the underlying physical computing devices (i.e., servers) have become increasingly powerful with the advent of multicore microprocessor architectures with a large number of cores per physical central processing unit (CPU), virtualization becomes easier and more efficient. A second advantage is that virtualization provides significant control over the computing infrastructure. As physical computing resources become fungible resources, such as in a cloud-based computing environment, provisioning and management of the computing infrastructure becomes easier. Thus, enterprise information technology (IT) staff often prefer virtualized compute clusters in data centers for their management advantages in addition to the efficiency and increased return on investment (ROI) that virtualization provides.

Containerization is a virtualization scheme based on operation system-level virtualization. Containers are light-weight and portable execution elements for applications that are isolated from one another and from the host. Because containers are not tightly coupled to the host hardware computing environment, an application can be tied to a container image and executed as a single light-weight package on any host or virtual host that supports the underlying container architecture. As such, containers address the problem of how to make software work in different computing environments. Containers offer the promise of running consistently from one computing environment to another, virtual or physical.

With containers' inherently lightweight nature, a single host can often support many more container instances than traditional virtual machines (VMs). These systems are characterized by being dynamic and ephemeral, as hosted services can be quickly scaled up or adapted to new requirements. Often short-lived, containers can be created and moved more efficiently than VMs, and they can also be managed as groups of logically-related elements (sometimes referred to as "pods" for some orchestration platforms, e.g., Kubernetes). These container characteristics impact the requirements for container networking solutions: the network should be agile and scalable. VMs, containers, and bare metal servers may need to coexist in the same computing environment, with communication enabled among the diverse deployments of applications. The container network should also be agnostic to work with the multiple types of orchestration platforms that are used to deploy containerized applications.

A computing infrastructure that manages deployment and infrastructure for application execution may involve two main roles: (1) orchestration-for automating deployment, scaling, and operations of applications across clusters of hosts and providing computing infrastructure, which may include container-centric computing infrastructure; and (2) network management-for creating virtual networks in the network infrastructure to enable packetized communication among applications running on virtual computing instances, such as containers or VMs, as well as among applications running on legacy (e.g., physical) environments. Software-defined networking contributes to network management.

### SUMMARY

In general, techniques are described for deploying workloads of containerized services to worker nodes in a network using network telemetry-aware scheduling. For example, telemetry collectors obtain network telemetry data from a network of worker nodes and/or from network nodes of the network. The telemetry collectors also obtain application performance data for containerized services of an application executing on the worker nodes, e.g., using a service mesh layered across the worker nodes. An analytics system processes the application performance data at run-time and, after establishing a baseline performance for an application, may determine whether the application as a whole, or a workload for the application in particular, is experiencing performance degradation from the baseline. If the analytics system determines, based on the network telemetry data, that application performance degradation is at least in part caused by insufficient network resources of the network or of a worker node of the network, the analytics system directs a scheduler for a container orchestration system, such as a Kubernetes platform, to modify the deployment of workloads for the application among the worker nodes.

For example, based on such a directive from the analytics system, the scheduler for the container orchestration system may process the network telemetry data, node telemetry data, and/or the application performance data to reprovision a workload to a different worker node. In some examples, the scheduler may determine that current network telemetry data indicates that a minimum bandwidth or minimum latency requirement for a workload can be met by scheduling the workload to a particular node having sufficient network resource availability. The scheduler may therefore reprovision the workload to that particular node.

In one example, this disclosure describes a method comprising establishing, by a computing system, an application performance baseline for an application based on application performance data and network telemetry data; based on determining that application performance has degraded from the application performance baseline, identifying, by the computing system, a correlation between a placement of a workload of the application to a first worker node of a plurality of worker nodes and the application performance data; and based on identifying the correlation, re-scheduling, by the computing system, the workload to a second worker node of the plurality of worker nodes.

In another example, this disclosure describes a computing system comprising one or more storage devices and one or more programmable processors in communication with the one or more storage devices and configured to establish an application performance baseline for an application based on application performance data and network telemetry data; based on a determination that application performance has degraded from the application performance baseline, identify a correlation between a placement of a workload of the application to a first worker node of a plurality of worker nodes and the application performance data; and based on the identification of the correlation, re-schedule the workload to a second worker node of the plurality of worker nodes.

In another example, this disclosure describes computer-readable media comprising instructions that, when executed, configure one or more processors to establish an application performance baseline for an application based on application performance data and network telemetry data; based on a determination that application performance has degraded from the application performance baseline, identify a correlation between a placement of a workload of the application to a first worker node of a plurality of worker nodes and the application performance data; and based on the identification of the correlation, re-schedule the workload to a second worker node of the plurality of worker nodes. A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The details of one or more embodiments of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example computing infrastructure in which examples of the techniques described herein may be implemented.
FIG. 2 is a block diagram illustrating an example computing system, in accordance with techniques described in this disclosure.
FIG. 3 is a block diagram of an example computing device operating that includes an orchestrator for scheduling worker nodes.
FIG. 4 is a flowchart illustrating an example operation of the computing infrastructure in accordance with one or more techniques of this disclosure.
FIG. 5 is a block diagram illustrating an example computing infrastructure in which the examples of the techniques described herein may be implemented.

Like reference characters denote like elements throughout the description and figures.

### DETAILED DESCRIPTION

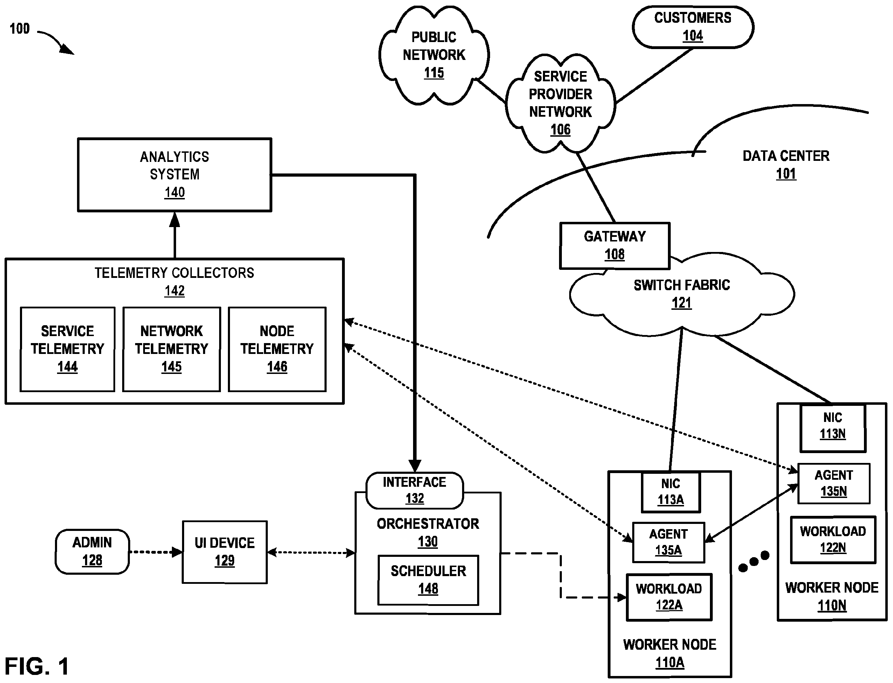

FIG. 1 is a block diagram illustrating an example computing infrastructure 100 in which examples of the techniques described herein may be implemented. In general, data center 101 provides an operating environment for applications and services for customer sites 104 (illustrated as "customers 104") having one or more customer networks coupled to the data center by service provider network 106. Data center 101 may, for example, host infrastructure equipment, such as networking and storage systems, redundant power supplies, and environmental controls. Service provider network 106 is coupled to public network 115, which may represent one or more networks administered by other providers, and may thus form part of a large-scale public network infrastructure, e.g., the Internet. Public network 115 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 106, an enterprise IP network, or some combination thereof.

Although customer sites 104 and public network 115 are illustrated and described primarily as edge networks of service provider network 106, in some examples, one or more of customer sites 104 and public network 115 may be tenant networks within data center 10 or another data center. For example, data center 101 may host multiple tenants (customers) each associated with one or more virtual private networks (VPNs), each of which may implement one of customer sites 104.

Service provider network 106 offers packet-based connectivity to attached customer sites 104, data center 101, and public network 115. Service provider network 106 may represent a network that is owned and operated by a service provider to interconnect a plurality of networks. Service provider network 106 may implement Multi-Protocol Label Switching (MPLS) forwarding and in such instances may be referred to as an MPLS network or MPLS backbone. In some instances, service provider network 106 represents a plurality of interconnected autonomous systems, such as the Internet, that offers services from one or more service providers.

In some examples, data center 101 may represent one of many geographically distributed data centers in which the techniques and systems described herein may be implemented. As illustrated in the example of FIG. 1, data center 101 may be a facility that provides network services, cloud services, storage services, and/or application services for customers. Data center 101 may represent an on-premises data center, a private cloud, a public cloud, a hybrid cloud, or other type of deployment. A customer of the service provider may be a collective entity such as enterprises and governments or individuals. For example, a data center may host web services for several enterprises and end users. Other example services may include data storage, virtual private networks, traffic engineering, file service, data mining, scientific- or super- computing, and so on. Although illustrated as a separate edge network of service provider network 106, elements of data center 101 such as one or more physical network functions (PNFs) or virtualized network functions (VNFs) may be included within the service provider network 106 core.

Switch fabric 121 may include interconnected top-of-rack (TOR) (or other "leaf') switches coupled to a distribution layer of chassis (or "spine" or "core") switches. Although not shown, data center 101 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Data center 101 may also include one or more physical network functions (PNFs) such as physical firewalls, load balancers, routers, route reflectors, broadband network gateways (BNGs), Evolved Packet Cores or other cellular network elements, and other PNFs.

The term "packet flow," "traffic flow," or simply "flow" refers to a set of packets originating from a particular source device or endpoint and sent to a particular destination device or endpoint. A single flow of packets may be identified by the 5-tuple: <source network address, destination network address, source port, destination port, protocol>, for example. This 5-tuple generally identifies a packet flow to which a received packet corresponds. An n-tuple refers to any n items drawn from the 5-tuple. For example, a 2-tuple for a packet may refer to the combination of <source network address, destination network address> or <source network address, source port> for the packet.

Any server of data center 101 may be configured with virtual execution elements by virtualizing resources of the server to provide an isolation among one or more processes (applications) executing on the server. "Hypervisor-based" or "hardware-level" or "platform" virtualization refers to the creation of virtual machines that each includes a guest operating system for executing one or more processes. In general, a virtual machine provides a virtualized/guest operating system for executing applications in an isolated virtual environment. Because a virtual machine is virtualized from physical hardware of the host server, executing applications are isolated from both the hardware of the host and other virtual machines. Each virtual machine may be configured with one or more virtual network interfaces for communicating on corresponding virtual networks.

Virtual networks are logical constructs implemented on top of the physical networks. Virtual networks may be used to replace VLAN-based isolation and provide multi-tenancy in a virtualized data center, e.g., data center 101. Each tenant or an application can have one or more virtual networks. Each virtual network may be isolated from all the other virtual networks unless explicitly allowed by security policy.

Virtual networks can be connected to and extended across physical Multi-Protocol Label Switching (MPLS) Layer 3 Virtual Private Networks (L3VPNs) and Ethernet Virtual Private Networks (EVPNs) networks using a datacenter edge router (not shown in FIG. 1). Virtual networks may also used to implement Network Function Virtualization (NFV) and service chaining.

Virtual networks can be implemented using a variety of mechanisms. For example, each virtual network could be implemented as a Virtual Local Area Network (VLAN), Virtual Private Networks (VPN), etc. A virtual network can also be implemented using two networks - the physical underlay network made up of switch fabric 121 and a virtual overlay network. The role of the physical underlay network is to provide an "IP fabric," which provides unicast IP connectivity from any physical device (server, storage device, router, or switch) to any other physical device. The underlay network may provide uniform low-latency, non-blocking, high-bandwidth connectivity from any point in the network to any other point in the network.

As described further below, virtual routers running in the kernels or hypervisors of the servers of data center 101 may create a virtual overlay network on top of the physical underlay network using a mesh of dynamic "tunnels" amongst themselves. These overlay tunnels can be MPLS over GRE/UDP tunnels, or VXLAN tunnels, or NVGRE tunnels, for instance. The underlay physical routers and switches may not contain any per-tenant state for virtual machines or other virtual execution elements, such as any Media Access Control (MAC) addresses, IP address, or policies. The forwarding tables of the underlay physical routers and switches may, for example, only contain the IP prefixes or MAC addresses of the servers. (Gateway routers or switches that connect a virtual network to a physical network are an exception and may contain tenant MAC or IP addresses.)

The virtual routers of the servers of data center 101 often contain per-tenant state. For example, they may contain a separate forwarding table (a routing-instance) per virtual network. That forwarding table contains the IP prefixes (in the case of a layer 3 overlays) or the MAC addresses (in the case of layer 2 overlays) of the virtual machines or other virtual execution elements (e.g., pods of containers). No single virtual router needs to contain all IP prefixes or all MAC addresses for all virtual machines in the entire data center. A given virtual router only needs to contain those routing instances that are locally present on the server (i.e., which have at least one virtual execution element present on the server.)

The control plane protocol between the control plane nodes of a network controller or a physical gateway router (or switch) may be BGP (and may be Netconf for management). This is the same control plane protocol may also be used for MPLS L3VPNs and MPLS EVPNs. The protocol between the network controller and the virtual routers may be based on XMPP, for instance. The schema of the messages exchanged over XMPP may accord with Mackie et. al, "BGP-Signaled End-System IP/VPNs," draft-ietf-13vpn-end-system-06, December 15, 2016, which is incorporated by reference herein in its entirety.

"Container-based" or "operating system" virtualization refers to the virtualization of an operating system to run multiple isolated systems on a single machine (virtual or physical). Such isolated systems represent containers, such as those provided by the open-source DOCKER Container application or by CoreOS Rkt ("Rocket"). Like a virtual machine, each container is virtualized and may remain isolated from the host machine and other containers. However, unlike a virtual machine, each container may omit an individual operating system and provide only an application suite and application-specific libraries. In general, a container is executed by the host machine as an isolated user-space instance and may share an operating system and common libraries with other containers executing on the host machine. Thus, containers may require less processing power, storage, and network resources than virtual machines. A group of one or more containers may be configured to share one or more virtual network interfaces for communicating on corresponding virtual networks.

In some examples, containers are managed by their host kernel to allow limitation and prioritization of resources (CPU, memory, block I/O, network, etc.) without the need for starting any virtual machines, in some cases using namespace isolation functionality that allows complete isolation of an application's (e.g., a given container) view of the operating environment, including process trees, networking, user identifiers and mounted file systems. In some examples, containers may be deployed according to Linux Containers (LXC), an operating-system-level virtualization method for running multiple isolated Linux systems (containers) on a control host using a single Linux kernel. LXC is an operating-system-level virtualization method for running multiple isolated Linux systems (containers) on a single control host (LXC host). An LXC does not use a virtual machine (although an LXC may be hosted by a virtual machine). Instead, an LXC uses a virtual environment with its own CPU, memory, block I/O, network, and/or other resource space. The LXC resource control mechanism is provided by *namespaces* and *cgroups* in the Linux kernel on the LXC host. Additional information regarding containers is found in "Docker Overview," Docker, Inc., available at docs.docker.com/engine/understanding-docker, last accessed July 9, 2016. Additional examples of containerization methods include OpenVZ, FreeBSD jail, AIX Workload partitions, and Solaris containers. Accordingly, as used herein, the term "containers" may encompass not only LXC-style containers but also any one or more of virtualization engines, virtual private servers, silos, or jails.

In the example of FIG. 1, data center 101 includes storage and/or compute servers interconnected via switch fabric 121 provided by one or more tiers of physical network switches and routers, with worker node 110A-110N (herein, "worker nodes 110") depicted as coupled to switch fabric 121. Worker nodes 110 may be bare metal machines and/or virtual machines within data center 101 and may also be referred to herein as "hosts" or "host devices." Worker nodes 110 may represent a computing device, such as an x86 processor-based server, configured to operate according to techniques described herein.

Worker nodes 110 host virtual network endpoints for one or more virtual networks that operate over the physical network represented here by switch fabric 121. Although described primarily with respect to a data center-based switching network, other physical networks, such as service provider network 106, may underlay the one or more virtual networks.

Each of worker nodes 110 may host one or more virtual execution elements such as each having at least one virtual network endpoint for one or more virtual networks configured in the physical network. A virtual network endpoint for a virtual network may represent one or more virtual execution elements that share a virtual network interface for the virtual network. For example, a virtual network endpoint may be a virtual machine, a set of one or more containers (e.g., a pod), or another other virtual execution element(s), such as a layer 3 endpoint for a virtual network. The term "virtual execution element" encompasses virtual machines, containers, and other virtualized computing resources that provide an at least partially independent execution environment for applications. The term "virtual execution element" may also encompass a pod of one or more containers. As shown in FIG. 1, worker node 110A hosts one virtual network endpoint having one or more containers. However, a worker node 110 may execute as many virtual execution elements as is practical given hardware resource limitations of the worker node 110. Each of the virtual network endpoints may use one or more virtual network interfaces to perform packet I/O or otherwise process a packet. For example, a virtual network endpoint may use one virtual hardware component (e.g., an SR-IOV virtual function) enabled by NIC 113A to perform packet I/O and receive/send packets on one or more communication links with switch fabric 121. Other examples of virtual network interfaces are described below.

Worker nodes 110 each include at least one network interface card (NIC) 113, which is composed of at least one interface to exchange packets with switch fabric 121 over a communication link. For example, worker node 110A includes NIC 113A. Any of NICs 113 may provide one or more virtual hardware components for virtualized input/output (I/O). A virtual hardware component for I/O maybe a virtualization of a physical NIC 113 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interfaces as "virtual functions" for use by respective endpoints executing on the worker node 110. In this way, the virtual network endpoints may share the same PCIe physical hardware resources and the virtual functions are examples of virtual hardware components.

NIC 113A may represent a library, a plugin, a module, a runtime, or other executable code for worker node 110A. NIC 113A may conform, at least in part, to the Container Networking Interface (CNI) specification or the rkt Networking Proposal. NIC 113A may represent a Contrail or OpenContrail network plugin. NIC 113A may alternatively be referred to as a network plugin or CNI plugin or CNI instance. For purposes of the Container Networking Interface (CNI) specification, a container can be considered synonymous with a Linux network namespace. What unit this corresponds to depends on a particular container runtime implementation: for example, in implementations of the application container specification such as rkt, each pod runs in a unique network namespace. In Docker, however, network namespaces generally exist for each separate Docker container. For purposes of the CNI specification, a network refers to a group of entities that are uniquely addressable and that can communicate among each other. This could be either an individual container, a machine/server (real or virtual), or some other network device (e.g., a router). Containers can be conceptually added to or removed from one or more networks.

As another example, one or more of the servers executing worker nodes 110 may implement Virtio, a para-virtualization framework available, e.g., for the Linux Operating System, that provides emulated NIC functionality as a type of virtual hardware component to provide virtual network interfaces to virtual network endpoints. As another example, one or more of the servers may implement Open vSwitch to perform distributed virtual multilayer switching between one or more virtual NICs (vNICs) for hosted virtual machines, where such vNICs may also represent a type of virtual hardware component that provide virtual network interfaces to virtual network endpoints. In some instances, the virtual hardware components are virtual I/O (e.g., NIC) components. In some instances, the virtual hardware components are SR-IOV virtual functions.

In some examples, any worker nodes 110 may implement a Linux bridge that emulates a hardware bridge and forwards packets among virtual network interfaces of the server or between a virtual network interface of the server and a physical network interface of the server. For Docker implementations of containers hosted by a server, a Linux bridge or other operating system bridge, executing on the server, that switches packets among containers may be referred to as a "Docker bridge." The term "virtual router" as used herein may encompass an Open vSwitch (OVS), an OVS bridge, a Linux bridge, Docker bridge, or other device and/or software that is located on a host device and performs switching, bridging, or routing packets among virtual network endpoints of one or more virtual networks, where the virtual network endpoints are hosted by one or more of servers 12.

Any of NICs 113 may include an internal device switch to switch data between virtual hardware components associated with the NIC. For example, for an SR-IOV-capable NIC, the internal device switch may be a Virtual Ethernet Bridge (VEB) to switch between the SR-IOV virtual functions and, correspondingly, between endpoints configured to use the SR-IOV virtual functions, where each endpoint may include a guest operating system. Internal device switches may be alternatively referred to as NIC switches or, for SR-IOV implementations, SR-IOV NIC switches. Virtual hardware components associated with NIC 113A may be associated with a layer 2 destination address, which may be assigned by the NIC 113A or a software process responsible for configuring NIC 113A. The physical hardware component (or "physical function" for SR-IOV implementations) is also associated with a layer 2 destination address.

To switch data between virtual hardware components associated with NIC 113A, internal device switch may perform layer 2 forwarding to switch or bridge layer 2 packets between virtual hardware components and the physical hardware component for NIC 113A. Each virtual hardware component may be located on a virtual local area network (VLAN) for the virtual network for the virtual network endpoint that uses the virtual hardware component for I/O.

One or more of worker nodes 110 may each include an agent 135 that manages the one or more workloads on each worker node such as workload 122A. Agent 135 may execute one or more routing instances for corresponding virtual networks within data center 101 to provide virtual network interfaces and route packets among the virtual network endpoints. Each of the routing instances may be associated with a network forwarding table. Each of the routing instances may represent a virtual routing and forwarding instance (VRF) for an Internet Protocol-Virtual Private Network (IP-VPN). Packets received by the virtual router of worker node 11A, for instance, from the underlying physical network fabric of data center 101 (i.e., switch fabric 12) may include an outer header to allow the physical network fabric to tunnel the payload or "inner packet" to a physical network address for a network interface card 113A of server that executes the virtual router. The outer header may include not only the physical network address of the network interface card 113A of worker node 110A, but also a virtual network identifier such as a VxLAN tag or Multiprotocol Label Switching (MPLS) label that identifies one of the virtual networks as well as the corresponding routing instance executed by the virtual router. An inner packet includes an inner header having a destination network address that conforms to the virtual network addressing space for the virtual network identified by the virtual network identifier.

Virtual routers of worker nodes 110 terminate virtual network overlay tunnels and determine virtual networks for received packets based on tunnel encapsulation headers for the packets, and forwards packets to the appropriate destination virtual network endpoints for the packets. For worker node 110A, for example, for each of the packets outbound from virtual network endpoints hosted by worker node 110A (e.g., workload 122A), the virtual router attaches a tunnel encapsulation header indicating the virtual network for the packet to generate an encapsulated or "tunnel" packet, and the virtual router outputs the encapsulated packet via overlay tunnels for the virtual networks to another node, such as another one of worker nodes 110. As used herein, a virtual router may execute the operations of a tunnel endpoint to encapsulate inner packets sourced by virtual network endpoints to generate tunnel packets and decapsulate tunnel packets to obtain inner packets for routing to other virtual network endpoints.

Computing infrastructure 100 implements an automation platform for automating deployment, scaling, and operations of virtual execution elements across worker nodes 110 to provide virtualized infrastructure for executing application workloads and services. In some examples, the platform may be a container orchestration platform that provides a container-centric infrastructure for automating deployment, scaling, and operations of containers to provide a container-centric infrastructure. "Orchestration," in the context of a virtualized computing infrastructure generally refers to provisioning, scheduling, and managing virtual execution elements and/or applications and services executing on such virtual execution elements to the host servers available to the orchestration platform. Container orchestration, specifically, permits container coordination and refers to the deployment, management, scaling, and configuration, e.g., of containers to host servers by a container orchestration platform. Example instances of orchestration platforms include Kubernetes, Docker swarm, Mesos/Marathon, Open Shift, OpenStack, VMware, and Amazon ECS.

Elements of the automation platform of computing infrastructure 100 include at least worker nodes 110, orchestrator 130, telemetry collectors 142, analytics system 140, and UI device 129. Virtual execution elements may be deployed to a virtualization environment using a cluster-based framework in which a cluster master node of a cluster manages the deployment and operation of containers to one or more cluster minion nodes of the cluster. The terms "master node" and "minion node" used herein encompass different orchestration platform terms for analogous devices that distinguish between primarily management elements of a cluster and primarily virtual execution element hosting devices of a cluster. For example, the Kubernetes platform uses the terms "cluster master" and "minion nodes," while the Docker Swarm platform refers to cluster managers and cluster nodes.

Orchestrator 130 implements a scheduler 148 for the computing infrastructure 100. Orchestrator 130 may be a distributed or centralized application that executes on one or more computing devices of a computing system. Orchestrator 130 may implement respective master nodes for one or more clusters each having one or more minion nodes implemented by one or more servers of computing infrastructure 100. Additional information regarding orchestrator 130 operating in conjunction with other devices of data center 101 or other software-defined network is found in International Application Number PCT/US2013/044378, filed June 5, 2013, and entitled "PHYSICAL PATH DETERMINATION FOR VIRTUAL NETWORK PACKET FLOWS;" in U.S. Patent Appln. No. 14/226,509, filed March 26, 2014, and entitled "Tunneled Packet Aggregation for Virtual Networks;" and in U.S. Patent Appln. No. 17/305,110, filed June 30, 2021, and entitled "Network Controller Horizontal Scaling for Network Device Configurations Session Management;" each of which is incorporated by reference as if fully set forth herein. U.S. Patent Appln. No. 14/226,509 also includes further description of a virtual router, such as virtual router 21A.

In general, orchestrator 130 controls the deployment, scaling, and operations of virtual execution elements across clusters of servers and providing computing infrastructure, which may include container-centric computing infrastructure. Orchestrator 130 may implement respective cluster masters for one or more Kubernetes clusters. As an example, Kubernetes is a container management platform that provides portability across public and private clouds, each of which may provide virtualization infrastructure to the container management platform. Orchestrator 130 may represent any of the above-listed orchestration platforms, e.g., Kubernetes.

Each of workloads 122A-122N is an example of a virtual network endpoint and a virtual execution element. Workloads 122 may each represent or include one or more containers deployed by a container orchestration system. One or more of workloads 122 may collectively implement a distributed application. Each of workloads 122 may provide or implement one or more services and where workloads 122 represent Pods or other container deployments, the one or more services are containerized services or "microservices".

In Kubernetes, a Pod is a group of one or more logically-related containers (not shown in FIG. 1), the shared storage for the containers, and options on how to run the containers. Where instantiated for execution, a pod may alternatively be referred to as a "pod replica." Containers of a pod are always co-located on a single server, co-scheduled, and run in a shared context. The shared context of a pod may be a set of Linux namespaces, *cgroups,* and other facets of isolation. Within the context of a pod, individual applications might have further sub-isolations applied. Typically, containers within a pod have a common IP address and port space and are able to detect one another via the localhost. Because they have a shared context, containers within a pod are also communicate with one another using inter-process communications (IPC). Examples of IPC include SystemV semaphores or POSIX shared memory. Generally, containers that are members of different pods have different IP addresses and are unable to communicate by IPC in the absence of a configuration for enabling this feature. Containers that are members of different pods instead usually communicate with each other via pod IP addresses.

In Kubernetes, by default all pods can communicate with all other pods without using network address translation (NAT). In some cases, the orchestrator 130 creates a service virtual network and a pod virtual network that are shared by all namespaces, from which service and pod network addresses are allocated, respectively. In some cases, all pods in all namespaces that are spawned in the Kubernetes cluster may be able to communicate with one another, and the network addresses for all of the pods may be allocated from a pod subnet that is specified by the orchestrator 130. When a user creates an isolated namespace for a pod, orchestrator 130 may create a new pod virtual network and new shared service virtual network for the new isolated namespace. Pods in the isolated namespace that are spawned in the Kubernetes cluster draw network addresses from the new pod virtual network, and corresponding services for such pods draw network addresses from the new service virtual network.

Further examples of techniques involving virtual execution elements are described in MULTIPLE VIRTUAL NETWORK INTERFACE SUPPORT FOR VIRTUAL EXECUTION ELEMENTS, U.S. Application No. 16/118,107, filed August 20, 2018; and UNIFIED CONTROL PLANE FOR NESTED CLUSTERS IN A VIRTUALIZED COMPUTING INFRASTRUCTURE, U.S. Application No. 16/118,731, filed August 31, 2018, the entire contents of each of which are incorporated by reference herein.

Orchestrator 130 includes scheduler 148 to schedule workloads 122A-122N (collectively, "workloads 122") to worker nodes 110. In general, scheduler 148 may manage the placement of each of workloads 122 to worker nodes 110 according to scheduling policies, the amount of resources requested for the workload, and available resources of worker nodes 110. Worker node resources considered by the scheduler 148 when assigning workloads 122 to worker nodes 110 include CPU-related resources (e.g., cores, CPU/core utilization), memory-related resources (available main memory, e.g., 2 GB), ephemeral storage, and user-defined extended resources. In Kubernetes, the scheduler is known as kube-scheduler.

Application workloads 122 may have distinct performance requirements that need to be met within a highly dynamic application execution environment. In such an environment, application performance is the artifact of dynamics of different resources such as worker node resources; network resources (e.g., bandwidth, latency, loss, jitter, firewall policies), network policies, and the communication graph among different services of a distributed application; as well as the performance of external services such as authentication and external cloud services.

In application execution environments, the performance of different applications and underlying networks are impacted by how different workloads of application services are scheduled among the worker nodes. Applications may have different QoS and resource requirements that need to be met while scheduling it across worker nodes 122 which can be distributed within data center 101 or across WAN boundaries, e.g., of networks 106, 115. Consider an example where two microservices communicate frequently then it may be desired to collocate the workloads 122 corresponding to those services within the same worker node 110 or set of worker nodes 110 within the same availability zone so as to ensure acceptable network QoS such as bandwidth, latency, loss, and/or jitter. Similarly, if an application microservice has specific requirements from hardware perspective, e.g., SSD, GPUs, then those specific workloads may need to be allocated on specific nodes 110 with those capabilities.

In Kubernetes, kube-scheduler is the main controller component that is responsible for supporting multiple such disparate scheduling requirements for different application microservices. Each application developer can specify detailed resource requirements based on their best understanding of the Kubernetes cluster resources and expected application behavior. However, due to the highly dynamic nature of the Kubernetes environment and given that multiple applications can co-exist in the same environment, it is not guaranteed that all application specific requirements can be met by the kube-scheduler. For example, it is possible that due to high CPU and memory requirements of one application, other co-existing applications may starve on the cluster. The following are two key limitations of the Kubernetes default scheduler that can impact application and network performance:
1. Default Kubernetes scheduler schedules Pods only based on their CPU and memory resource requirements. As a result, scheduling decisions are made while remaining agnostic to network QoS requirements such as bandwidth, or latency requirements. This may result in a scenario where worker nodes 110 may meet CPU and memory requirements of all the pods, but where the network bandwidth can become a bottleneck leading to degraded performance.
2. Moreover, the default Kubernetes scheduler makes decisions based on the static resource requirements of the Pod. The default Kubernetes scheduler will reserve the requested CPU and memory resources on the worker nodes 110 even when actual usage of the CPU and memory resources is significantly low. There is no notion of using real time usage telemetry of the resources to make better scheduling decisions to improve resource efficiency and satisfy network QoS requirements.

In accordance with techniques of this disclosure, scheduler 148 schedules workloads 122 to worker nodes 110 using network telemetry-aware scheduling. Scheduler 148 may re-schedule one or more workloads 122 that comprise an application to a different worker node of worker nodes 110 based on an indication that the performance of the application has fallen below a baseline as a result of the placement of the one or more of workloads 122. Consequently, scheduler 148 may address limitations of a default scheduler noted above to schedule workloads 122 in a manner that is sensitive to network QoS requirements for supporting not only the individual workloads 122, but at least in some cases supporting the distributed application as a whole. In some example instances, scheduler 148 may also or alternatively schedule (or reschedule) workloads 122 in a manner that accounts for dynamic resource usage of workloads 122 over time.

Computing infrastructure 100 may include telemetry collectors 142. Telemetry collectors 142 may obtain network data from worker nodes 110 via one or more sources such as agents 135 executing on the worker nodes 110. Telemetry collectors 142 may include service telemetry 144, network telemetry 145, and node telemetry 146.

Service telemetry 144 may include network data from a service mesh of computing infrastructure 100 such as application-level telemetry. Computing infrastructure 100 may include a service mesh for the management of worker nodes 110 and the workloads 122. Telemetry collectors 142 may obtain network data from the service mesh for use in scheduling workloads 122 to worker nodes 110. Additionally, telemetry collectors 142 may use service telemetry 144 to acquire data regarding application performance of one or more applications that include one or more workloads scheduled to worker nodes 110.

Telemetry collectors 142 may obtain network telemetry data as network telemetry 145 from the network of computing infrastructure 100. Network telemetry 145 may include network telemetry data such as data regarding the state of a network interconnecting worker nodes 110 such as switch fabric 121. Network telemetry 145 also may include data describing interconnections between computing devices of computing infrastructure 100 such as data describing connections between worker nodes of worker nodes 110 and intermediate connections between worker nodes 110. Node telemetry 146 may include node telemetry data obtained from worker nodes 110. For example, node telemetry 146 may include data such as resource availability (e.g., processor and memory availability) of individual worker nodes of worker nodes 110 and resource utilization of individual worker nodes and one or more clusters of worker nodes 110. Node telemetry 146 may include data such as the network performance of the worker nodes 110 and the workloads 122 scheduled to worker nodes 110. For example, node telemetry 146 may include data regarding one or more network performance characteristics of the worker nodes and workloads such as round trip time (RTT), latency, available bandwidth, network resource usage, etc. In addition, telemetry collectors 142 may receive quality of service (QoS) requirements for a workload of the application. Telemetry collectors may receive QoS requirements such as minimum available bandwidth, RTT requirements, maximum latency requirements, and reliability requirements.

Telemetry collectors 142 may provide the collected network telemetry to analytics system 140 for analysis. Analytics system 140 may analyze the network telemetry and identify where application and network performance has degraded. Analytics system 140, as part of identifying the degradation of application performance, may use data such as service telemetry 144 to understand a current distribution of application workloads across worker nodes 110. In addition, analytics system 140 may use node telemetry 146 to determine a baseline of network performance of each worker node of worker nodes 110 for a given workload such as a workload of an application.

Analytics system 140 identify baseline communication dependencies across workloads such as microservices using service telemetry 144. Analytics system 140 may use this determination to determine latency and bandwidth profile for each link in a service mesh of switch fabric 121. Analytics system 140 may use data from the service mesh acting as a data plane that is collected by telemetry collectors 142.

Analytics system 140 may establish a baseline of network performance for worker nodes 110. Analytics system 140, based on data obtained from telemetry collectors 142, may determine a baseline of network performance for each worker node that may represent the network performance of a worker node when the worker node is healthy (e.g., when the network performance of the worker node does not impact the performance of the workloads scheduled to the worker node).

Analytics system 140 may utilize data from telemetry collectors 142 get application and network performance visibility in a Kubernetes environment using multiple sources of data such as K8s cluster resource usage, service mesh for application performance visibility, and active probing for underlying network visibility. Analytics system 140 may determine baseline performance of scheduler 148 on the application and network performance. Analytics system 140 may understand a current distribution of the application pods across worker nodes. In addition, analytics system 140 may determine a baseline network performance of each worker node for a given workload and baseline communication dependencies across multiple micro services using service mesh telemetry. Analytics system 140 may determine latency and bandwidth profile for each link in the service mesh. In the service mesh, analytics system 140 may receive, from a dataplane, application service telemetry which is exported to telemetry collectors 142. Analytics system 140 may determine correlations between default scheduler placements and corresponding impact on application telemetry. Analytics system 140 may correlate each link in the service mesh to the underlay network path. This may require flow level telemetry in the underlay to determine the path between two worker nodes between which two services communicate in the service mesh. Once path information is available, the baseline state of each intermediate hop can be determined. In some examples, analytics system 140 may use In-band Telemetry (INT) when available on the worker nodes, then that can be used to determine the end-to-end network path between worker nodes.

Worker nodes 110 or subset of the worker nodes 110 in the network path may support INT. This can provide end-to-end and per hop latency between any two worker nodes for further root cause analysis.

Analytics system 140 may additionally establish a baseline of application level, node level, and network level telemetry. Analytics system 140 may include an analytics data pipeline that consumers real-time telemetry from one or more sources. Analytics system 140 may generate actuation signals during any performance degradation for scheduler 148, which may re-provision the workload to other worker nodes while considering the current health of the existing worker nodes. Besides scheduler 148 there can be other consumers of the actuation signals generated by the data pipeline. Some of the possible consumers that can make use of these real-time performance feedback are:
a. Traffic Management in the service mesh based on the existing application performance. Different traffic management policies can be applied by a service mesh controller, such as load balancing behavior can be changed from default round-robin to location aware, service load aware load balancing. These decisions can be taken based on the real-time service performance visibility and continuous analysis of the collected data. Service mesh traffic management policies can be triggered based on outlier detection policies, these configuration policies at present are configured statically. Real-time analysis of application performance can enable fine tuning of these outlier detection policies on a per service basis and can be applied dynamically for making adaptive traffic management decisions.
b. Cloud Native SD-WAN provisioning based on the real-time application and network performance feedback

Analytics system 140, based on data obtained by telemetry collectors 142, may determine one or more correlations between the placement of a workload to a worker node of worker nodes 110 and data consistent with degraded application performance received from the service mesh. For example, analytics system 140 may determine a correlation between the placement of workload 122A to worker node 110A and service telemetry 144 that indicates the degradation of the performance of an application that includes workload 122A. In another example, analytics system 140 determines that the network performance of a worker node has degraded from a baseline of network performance of that worker node. Analytics system 140 may identify the correlation based in part on the determination of degraded network performance of a worker node.

Analytics system 140 may obtain data regarding network performance of the plurality of worker nodes of the network and identify worker nodes of the plurality of worker nodes that are executing any workload of the application. Analytics system 140 may determine, based on the data regarding network performance and the identified worker nodes, a degraded network performance of the application caused by the network performance of the identified worker nodes and cause scheduler 148 to re-schedule based on the determined degraded network performance of the application.

Analytics system 140 may establish a network performance baseline for the plurality of worker nodes, and identify the correlation is based at least in part on the data regarding network performance and the network performance baseline.

Analytics system 140 may use data regarding intermediate connections between worker nodes 110 to identify a correlation. For example, analytics system 140 may obtain data regarding intermediate connections from telemetry collectors 142. Analytics system may determine, based on the intermediate connections and based on the data regarding network performance of worker nodes 110, a degraded network performance of the application caused by the network performance of the intermediate connections between worker nodes 110. Analytics system 140 may provide the determination to orchestrator 130 for re-scheduling of the one or more workloads of the application based on the determined degraded network performance of the application caused by the network performance of the intermediate connections.

Analytics system 140 may use data regarding application performance to determine if the performance of one or more applications has degraded from a baseline of application performance established when an application is first scheduled. Analytics system 140 may identify correlations between the degradation of application performance and the placement of application workloads to worker nodes. In addition, analytics system 140 may determine that one or more QoS requirements of the workload for the application are not met.

In an example, an application with workloads scheduled to three worker nodes begins responding slowly to requests and occasionally times out. Analytics system 140 may determine that the performance of the application has fallen below a baseline. Analytics system 140, responsive to the determination, analyzes data from telemetry collectors 142. Analytics system 140 may use the data from telemetry collectors to identify a correlation between the application performance and deployment of one or more of workloads 122 to the worker nodes. For example, analytics system 140 may determine that one of worker nodes 122 has network performance characteristics that are impacting the performance of the application. Analytics system 140 generates an indication of the correlation and provides the indication to orchestrator 130. Orchestrator 130, based on the indication, identifies a replacement worker node and causes scheduler 148 to re-schedule the workload executing on the problematic worker node to the replacement worker node. In another example, analytics system 140 generates an indication that one or more QoS requirements of an application are not met. Orchestrator 130, based on the indication, may re-schedule one or more workloads based on the QoS requirements and the indication.

In the example of FIG. 1, orchestrator 130 schedules workloads 122 to worker nodes 110 using telemetry-aware scheduling. For example, telemetry collectors 142 may obtain network telemetry 145 from the network of worker nodes 110 and/or from network nodes of a network such as switch fabric 121. Telemetry collectors 142 may obtain application performance data for containerized services of an application executing on worker nodes 110, e.g., using a service mesh layered across worker nodes 110. Analytics system 142 may process the application performance data at run-time and, after establishing a baseline performance for the application, determine whether the application as a whole, or a workload for the application in particular such as workload 122A, is experiencing performance degradation from the baseline. If analytics system 142 determines, based on network telemetry 145, that application performance degradation is at least in part caused by insufficient network resources of the network or of a worker node of worker nodes 110 of the network, analytics system 142 directs scheduler 148 of orchestrator 130 to modify the deployment of workloads for the application among the worker nodes.

For example, based on such a directive from analytics system 140, scheduler 148 for orchestrator 130 may process network telemetry 145, node telemetry 146, and/or the application performance data from service telemetry 144 to reprovision a workload to a different worker node of worker nodes 110. In some examples, scheduler 148 may determine that current network telemetry data indicates that a minimum bandwidth or minimum latency requirement for a workload can be met by scheduling the workload to a particular node having sufficient network resource availability. Scheduler 148 may therefore reprovision the workload to that particular node such as worker node 110B of worker nodes 110.

Scheduler 148 may be an extension to the default Kubernetes scheduler to consider latency and bandwidth requirement while scheduling pods across worker nodes such as worker nodes 110. Scheduler 148 may use strategically placed round-trip time (RTT) labels to device whether it is suitable to deploy a specific service based on the target location specified on the pod configuration file. The node selection may be based on the minimization of the RTT depending on the target location for the service after the completion of the filter step by scheduler 148. Additionally, in terms of bandwidth, scheduler 148 may check if the best candidate node had enough bandwidth to support the given service based on the bandwidth requirement label.

Scheduler 148 may schedule workloads based on one or more metrics of real-time performance telemetry across application and underlay networks such as application bandwidth requirements, application latency requirements, real-time and historical network telemetry from worker nodes 110 regarding current and historical usage of the network bandwidth, real-time and historical application-level telemetry from a service mesh (e.g., service telemetry 144). Scheduler 148 may schedule based on active probing between nodes to determine node to node latency and jitter and utilize it for scheduling new pods or rescheduling existing pods. Telemetry collectors 542 may obtain probing information from NICs 113 and provide it via analytics system 140 for use by scheduler 148, where NICs 113 have additional intelligence (e.g., smartNIC) that enables NICs 113 to probe connections between worker nodes 110. Scheduler 148 may correlate network-aware scheduling and corresponding data from telemetry collectors 142 to validate improve in application performance.

UI device 129 may enable admin 128 to request rescheduling of workloads 122 among worker nodes 110. UI device 129 may one or more computing devices such as a server, laptop, desktop computer, tablet computer, or other computing device. UI device 129 may receive data from orchestrator 130 such as a listing of current workloads 122 and their status on worker nodes 110. UI device 129 may display data via one or more components such as a touch-sensitive display to admin 128. UI device may receive input from admin 128 and provide data regarding the input to orchestrator 130.

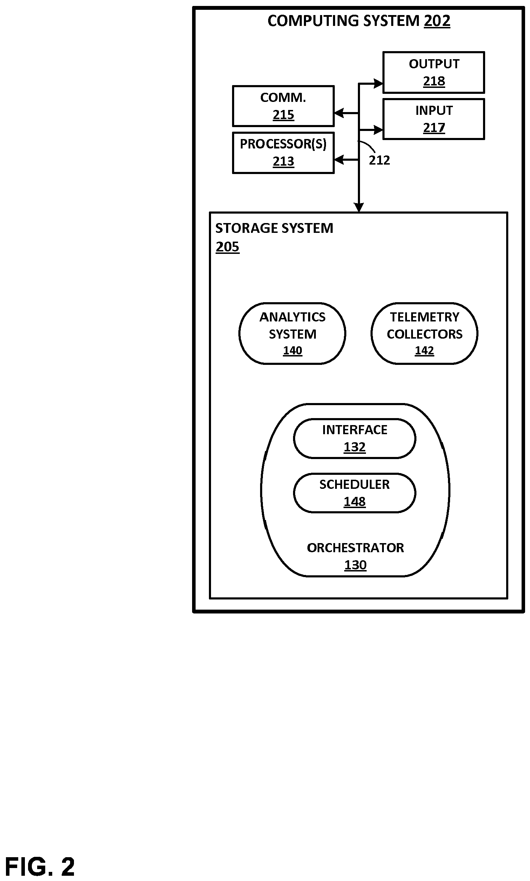

FIG. 2 is a block diagram illustrating an example computing system, in accordance with techniques described in this disclosure. Computing system 202 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 202 represents a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 2, computing system 202 may include one or more processor(s) 213, communication units 215, one or more input devices 217, one or more output devices 218, and one or more storage devices of storage system 205. Storage system 205 includes analytics system 140, telemetry collectors 142, and orchestrator 130. One or more of the devices, modules, storage areas, or other components of computing system 202 may be interconnected to enable inter-component communications (physically, communicatively, and/or operatively). In some examples, such connectivity may be provided by through communication channels which may represent one or more of a system bus, a network connection, an inter-process communication data structure, or any other method for communicating data.

One or more of processor(s) 213 may implement functionality and/or execute instructions associated with computing system 202 or associated with one or more modules illustrated herein and/or described below. One or more of processor(s) 213 may be, may be part of, and/or may include processing circuitry that performs operations in accordance with one or more aspects of the present disclosure. Examples ofprocessor(s) 213 include microprocessors, application processors, display controllers, auxiliary processors, one or more sensor hubs, and any other hardware configured to function as a processor, a processing unit, or a processing device. Computing system 202 may use one or more processor(s) 213 to perform operations in accordance with one or more aspects of the present disclosure using software, hardware, firmware, or a mixture of hardware, software, and firmware residing in and/or executing at computing system 202.

One or more communication units 215 of computing system 202 may communicate with devices external to computing system 202 by transmitting and/or receiving data, and may operate, in some respects, as both an input device and an output device. In some examples, communication units 215 may communicate with other devices over a network. In other examples, communication units 215 may send and/or receive radio signals on a radio network such as a cellular radio network. In other examples, communication units 215 of computing system 202 may transmit and/or receive satellite signals on a satellite network. Examples of communication units 215 include a network interface card (e.g., such as an Ethernet card), an optical transceiver, a radio frequency transceiver, a GPS receiver, or any other type of device that can send and/or receive information. Other examples of communication units 215 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 217 may represent any input devices of computing system 202 not otherwise separately described herein. Input devices 217 may generate, receive, and/or process input. For example, one or more input devices 217 may generate or receive input from a network, a user input device, or any other type of device for detecting input from a human or machine.

One or more output devices 218 may represent any output devices of computing system 202 not otherwise separately described herein. Output devices 218 may generate, present, and/or process output. For example, one or more output devices 218 may generate, present, and/or process output in any form. Output devices 218 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of storage system 205 within computing system 202 may store information for processing during operation of computing system 202. Storage system 205 may store program instructions and/or data associated with one or more of the modules described in accordance with one or more aspects of this disclosure. One or more processors 213 and one or more storage devices may provide an operating environment or platform for such modules, which may be implemented as software, but may in some examples include any combination of hardware, firmware, and software. One or more processors 213 may execute instructions and one or more storage devices of storage system 105 may store instructions and/or data of one or more modules. The combination of processors 213 and storage system 205 may retrieve, store, and/or execute the instructions and/or data of one or more applications, modules, or software. Processors 213 and/or storage devices of storage system 205 may also be operably coupled to one or more other software and/or hardware components, including, but not limited to, one or more of the components of computing system 202 and/or one or more devices or systems illustrated as being connected to computing system 202.

Telemetry collectors 142 may obtain network and application performance data from one or more sources as described above in FIG. 1. Telemetry collectors 142 may provide the network and application performance data to analytics system 140 for processing and comparing with baselines of network and application performance. Telemetry collectors 140 may obtain network telemetry data such as available bandwidth, network link utilization, per-hop latency among the plurality of worker nodes, historical network telemetry data, node latency, node packet loss, and node jitter.

Analytics system 140 may generate baselines of application performance. Analytics system 140 may generate a baseline of application performance when an application is first deployed to one or more of worker nodes 110. Analytics system 140 may store the baseline of application performance for use in determining whether the performance of the application has degraded from when the application was initially deployed.

Analytics system 140 may determine that performance of an application has degraded from a baseline of application performance. Analytics system 140 may compare data regarding the performance of an application to the stored baseline of performance to determine whether the performance of the application has degraded (e.g., the application is experiencing higher latency).

Analytics system 140 may compare the data regarding the degradation of application performance to network performance data obtained by telemetry collectors 142 to identify one or more correlations between network performance and application performance. Analytics system 140 may associate network performance data with the plurality of worker nodes such as worker nodes 110. Analytics system 140, based on the association, may determine network performance indicators for the plurality of worker nodes, where the network performance indicators indicate degraded network performance of the plurality of worker nodes. Analytics system 140 may identify a correlation between the placement of a workload of an application to a first worker and application performance data. For example, analytics system 140 may identify a correction between the placement of workload 122A to worker node 110A as illustrated in FIG. 1 and the performance of an application that incorporates workload 122A.

Analytics system 140 may identify a correlation in the degradation of the performance of an application with the identification of a fault in the network. Analytics system 140 may obtain indicators of dependencies between a plurality of resources in the network and event dependencies between a plurality of network events and one or more of the plurality of resources, as well as receive an indication of a fault in the network. Analytics system 140 may, based on the on identifying that application performance has degraded from the application performance baseline, identify, a second correlation between the fault, a placement of a second workload to a third worker node, and the application performance data. Analytics system 140 may provide an indication to re-schedule the second workload to orchestrator 130 to reschedule the second workload based on the correlation.

Analytics system 140 may identify the correlation based on one or more factors. Analytics system 140 may identify the correlation in part based on one or more of: communication dependencies between the plurality of worker nodes, network data from service mesh telemetry, end-to-end network paths among the plurality of worker nodes, network data from the plurality of worker nodes, network data from a probe of connections utilized by the plurality of worker nodes, and network data from network elements between the plurality of worker nodes. Analytics system 140 may additionally establish a baseline of network performance and identify the correlation in part based on the baseline of network performance.

Analytics system 140 may utilize a mapping of connections between worker nodes to determine a correlation between degraded application performance and the placement of a workload to a worker node. Analytics system 140 may receive data regarding intermediate connections between worker nodes (e.g., virtual routers, network paths, etc.) and generate a mapping of the connection between worker nodes. Analytics system 140 may identify, based on an association between the mapping of intermediate connections and the network performance indicators, the correlation between the placement of the workload and the application performance data.

Analytics system 140, based on the identification of a correlation, may provide indicators of the correlation to orchestrator 130. Orchestrator 130 may use the indicators to determine that the application needs to be reassigned. Orchestrator 130 may utilize data regarding the configuration of computing infrastructure 100 (e.g., which nodes have capacity for additional workloads) to determine the reassignment of application workloads to different nodes than those that are currently executing the application workloads.

Analytics system 140 may identify critical and non-critical workloads of an application. Analytics system 140 may identify a workload as critical or non-critical based on one or more factors such as whether a particular workload impacts the functionality and performance of the application. In addition, an application executing on worker nodes 110 may provide data to analytics system 140 that categorizes the workloads of the application as critical and non-critical. Analytics system 140 may utilize the categorization of critical vs. non-critical in determining whether a workload requires re-scheduling to a different worker node. In an example, analytics system 140 re-schedules a workload based on determining that a workload of the application is a critical workload.

Analytics system 140 may keep non-critical workloads scheduled to worker nodes that are experiencing degraded network performance. In an example, analytics system 140 may determine that a non-critical workload of an application is deployed to a worker node having degraded network performance. Analytics system 140 may determine an absence of a correlation (i.e., that insufficient correlation exists to justify rescheduling, in view of a threshold for instance) between the placement of the non-critical workload and application performance data and keep the non-critical workload scheduled to the worker node with degraded application performance. In an example, analytics system 140 determines that a non-critical workload of the application is deployed to a worker node, of a plurality of worker nodes such as worker nodes 110, having degraded network performance Analytics system 140 determine the absence of a correlation between the placement of the non-critical workload and the application performance data and keeps the non-critical workload as scheduled to the worker node with degraded network performance.

Analytics system 140 may obtain indicators of indicators of dependencies between a plurality of resources in a network such as switch fabric 121 and event dependencies between a plurality of network events and one or more of the plurality of resources. Analytics system 140 may receive an indication of a fault in the network from telemetry collectors 142 and, based on identifying that application performance has degraded from the application performance baseline, identify a second correlation between the fault, a placement of a second workload to a third worker node, and the application performance data. Analytics system 140 may provide an indication to orchestrator 130 to re-schedule based on the second correlation.

Orchestrator 130 may represent a container orchestration platform. Orchestrator 130 may utilize scheduler 148 to re-schedule workloads among the worker nodes. Scheduler 148 may use data regarding worker nodes to identify one or more candidate worker nodes that would enable the application to meet the baseline of application performance should the application's workloads be assigned to the candidate worker nodes. Scheduler 148 may identify the candidate worker nodes based on one or more criteria to ensure that the application performance baseline is met once the workloads are assigned to the candidate worker nodes. In addition, scheduler 148 may re-schedule a workload based on the QoS requirements of that workload.

Scheduler 148, based on the identification of candidate worker nodes, may re-schedule the workloads of the application to the candidate worker nodes. Scheduler 148 may re-schedule the workloads based on one or more factors such as whether a candidate worker node has sufficient resources to support the scheduling of the workload. In addition, scheduler 148 may keep a non-critical workload on a worker node instead of reassigning the non-critical workload in order to optimize network resources for critical workloads.

In an example, telemetry collectors 142 receives data from worker node 110A regarding the network performance associated with workload 122A. Analytics system 140, based on the data received regarding workload 122A, determines that a degradation of the performance of an application is associated with the network performance of workload 122A. Analytics system 140 additionally determines that workload 122A is a critical workload of the application, and provides an indication to scheduler 148 to re-schedule workload 122A to a different worker node of worker nodes 110.

In another example, telemetry collectors 142 receive network performance data consistent with workload 122A experiencing degraded network performance. Analytics system 140 obtains the network data from telemetry collectors 142 and determines that workload 122A is a non-critical workload of the associated application. Analytics system 140 refrains from providing an indication to re-schedule workload 122A as the workload is a non-critical workload whose degraded network performance does not impact the performance of the application.

Containers, including those implementing simulator 125 and test agents 140, may be deployed to a virtualization environment using a cluster-based framework in which a cluster master node of a cluster manages the deployment and operation of containers to one or more cluster minion nodes of the cluster. Servers 112 or virtual machines thereon may represent cluster nodes.

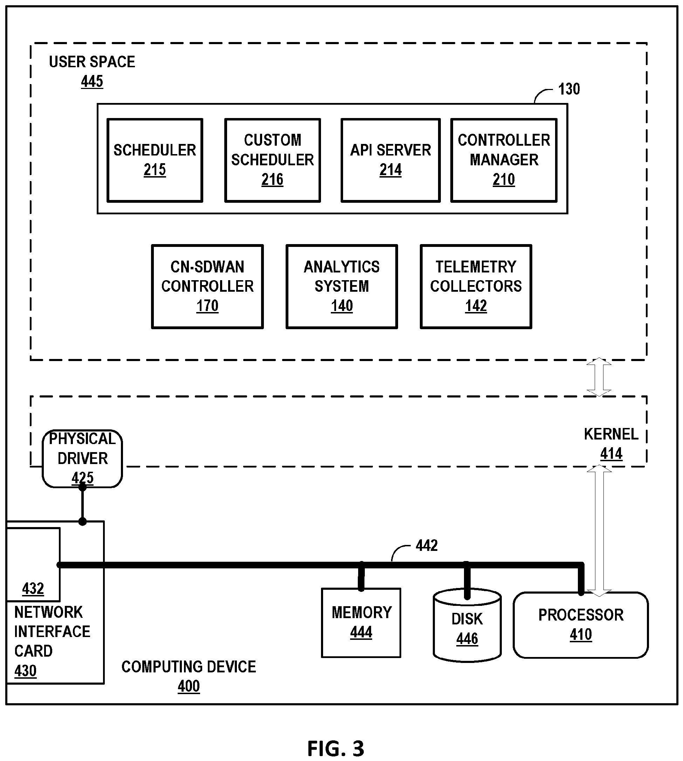

FIG. 3 is a block diagram of am example computing device operating that includes an orchestrator for scheduling worker nodes.

In the example of FIG. 3, computing device 400 includes a bus 442 coupling hardware components of a computing device 400 hardware environment. Bus 442 couples network interface card (NIC) 430, storage disk 446, and one or more processors 410 (hereinafter, "processor 410"). A front-side bus may in some cases couple processor 410 and memory device 444. In some examples, bus 442 may couple memory device 444, processor 410, and NIC 430. Bus 442 may represent a Peripheral Component Interface (PCI) express (PCIe) bus. In some examples, a direct memory access (DMA) controller may control DMA transfers among components coupled to bus 442. In some examples, components coupled to bus 442 control DMA transfers among components coupled to bus 442.

Processor 410 may include one or more processors each including an independent execution unit to perform instructions that conform to an instruction set architecture, the instructions stored to storage media. Execution units may be implemented as separate integrated circuits (ICs) or may be combined within one or more multi-core processors (or "many-core" processors) that are each implemented using a single IC (i.e., a chip multiprocessor).

Disk 446 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, Flash memory, CD-ROM, digital versatile discs (DVD) or other optical storage, magnetic cassettes, magnetic tape, magnetic disk storage or other magnetic storage devices, or any other medium that can be used to store the desired information and that can be accessed by processor 410.

Main memory 444 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 444 provides a physical address space composed of addressable memory locations.

Network interface card (NIC) 430 includes one or more interfaces 432 configured to exchange packets using links of an underlying physical network. Interfaces 432 may include a port interface card having one or more network ports. NIC 430 may also include an on-card memory to, e.g., store packet data. Direct memory access transfers between the NIC 430 and other devices coupled to bus 442 may read/write from/to the NIC memory.

Memory 444, NIC 430, storage disk 446, and processor 410 may provide an operating environment for a software stack that includes an operating system kernel 414 executing in kernel space. Kernel 414 may represent, for example, a Linux, Berkeley Software Distribution (BSD), another Unix-variant kernel, or a Windows server operating system kernel, available from Microsoft Corp. In some instances, the operating system may execute a hypervisor and one or more virtual machines managed by hypervisor. Example hypervisors include Kernel-based Virtual Machine (KVM) for the Linux kernel, Xen, ESXi available from VMware, Windows Hyper-V available from Microsoft, and other open-source and proprietary hypervisors. The term hypervisor can encompass a virtual machine manager (VMM). An operating system that includes kernel 414 provides an execution environment for one or more processes in user space 445. Kernel 414 includes a physical driver 425 that provides an interface for use by components of computing device 400 to use the network interface card 430.

Computing device 400 may be coupled to a physical network switch fabric (e.g., via NIC 430) that includes an overlay network that extends switch fabric from physical switches to software or "virtual" routers of physical servers coupled to the switch fabric. Computing device 400 may use one or more dedicated virtual networks to configure worker nodes 110 (FIG. 1) of a cluster.

Computing device 400 can include API server 214, default scheduler 215, custom scheduler 216 and controller manager 210 each include code executable as one or more computer processes by processor. In general, API server 214 may invoke scheduler 215 or custom scheduler 216 to schedule a virtual execution element on a worker node 110 (FIG. 1). If the pod specification for the pod specifies that custom scheduler 216 is to be used to schedule the pod, custom scheduler 216 may select a worker node to schedule the virtual execution element according to the technique described herein. For example, custom scheduler 216 may select a worker node based on a best match between the node profile and tuning parameters with virtual element characteristics such as pod characteristics in a pod specification. API server 214 may invoke orchestrator 130 (FIG. 1) for the selected worker node, which may cause scheduler 148 (FIG. 1) for the selected worker node to obtain the virtual execution element from a storage server and create the virtual execution element on the worker node. Orchestrator 130 for the selected worker node may update the status for the virtual execution element to the API server 214, which persists this new state to the database 218. In this way, computing device 400 instantiates new virtual execution elements in the computing infrastructure 100.

Computing device 400 may include instances of orchestrator 130, analytics system 140, telemetry collectors 142. Orchestrator 130, analytics system 140, and telemetry collectors 142 may provide similar or different functionality as illustrated in prior figures such as FIG. 1.

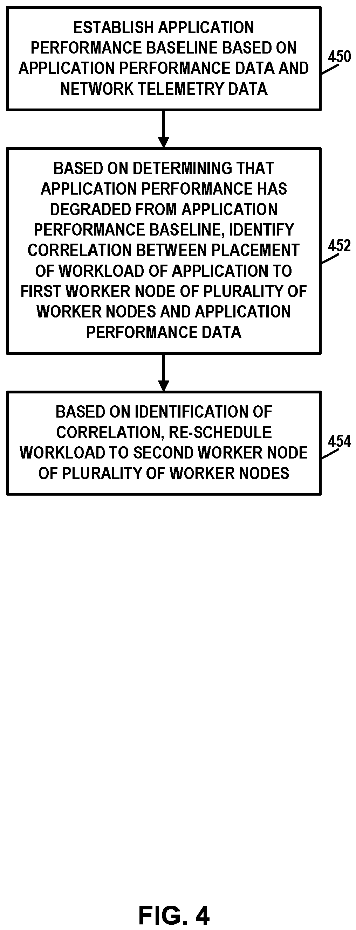

FIG. 4 is a flowchart illustrating an example operation of the computing infrastructure in accordance with one or more techniques of this disclosure.

An orchestrator, such as orchestrator 130 illustrated by FIG. 1, deploys an application to a worker node such as worker node 110A. Orchestrator 130 establishes a baseline of application performance based on application performance data and network telemetry data (450). Orchestrator 130 may establish the baseline of application performance using network data such as node telemetry data, service mesh data, and network telemetry data.

Analytics system 140 may determine that application performance has degraded from the baseline of application performance. Analytics system 140, based on determining that the application performance has degraded from the baseline, identifies a correlation between placement of one or more workloads of the application to a first worker node, such as worker node 110A illustrated by FIG. 1, of a plurality of worker nodes and the application performance data (452). Analytics system 140 may identify the correlation based on one or more factors. For example, analytics system 140 may identify the correlation based on factors such as degraded network performance between the first worker nodes and other worker nodes.

Analytics system 140, based on the identification of the correlation, re-schedules the workload to a second worker node of the plurality of worker nodes (454). Analytics system 140 may select the second worker node based one or more criteria such as the level of available resources of the second worker node, performance statistics of the second worker node, and other metrics.

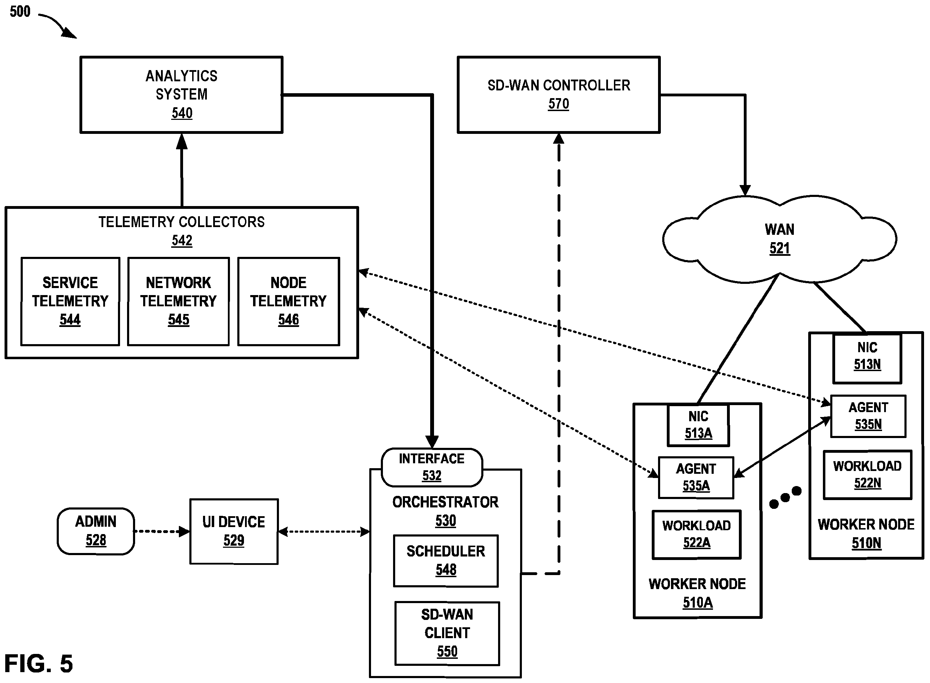

FIG. 5 is a block diagram illustrating an example computing infrastructure in which the examples of the techniques described herein may be implemented.

FIG. 5 illustrates computing infrastructure 500 having elements similar to those of computing infrastructure 100 illustrated in FIG. 1, but in the context of dynamically provisioning software-defined networking in a wide area network (SD-WAN) resources among worker nodes 510A-510N (hereinafter "worker nodes 510") that communicate via WAN 521.

Network providers and enterprises may use SD-WAN to manage network connectivity among distributed locations, such as remote branch or central offices or data centers. SD-WAN extends software-defined networking (SDN) to enable organizations to create connections quickly and efficiently over a WAN such as WAN 521, which may include the Internet or other transport networks that offer various WAN connection types, such as Multi-Protocol Label Switching (MPLS)-based connections, mobile network connections (e.g., 3G, Long-Term Evolution (LTE), 5G), Asymmetric Digital Subscriber Line (ADSL), cable broadband, and so forth. Such connections are typically referred to as "WAN links". SD-WAN is considered a connectivity solution that is implemented with WAN links as an overlay on top of traditional WAN access, making use of the above or other WAN connection types.

WAN 521 provides a network for geographically distributed worker nodes 510 to communicate. In some examples, WAN 521 may represent a network interconnecting many geographically distributed network data centers. WAN 521 may include one or more types of network switches and non-edge switches, routers, hubs, gateways, security devices such firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In the example of FIG. 5, worker nodes 510 may be bare metal machines and/or virtual machines within various data centers interconnected via WAN 521. Worker nodes 510 may include one or more components such as, in the example of worker node 510A, NIC 513A, agent 535A, and workload 522A. NICs 513A-513N (hereinafter "NICs 513") may include one or more internal devices to switch data between virtual hardware components associated with NIC 513s. NIC 513A may enable worker node 510A to communicate with other worker nodes of worker nodes 510 over WAN 521.

Telemetry collector 542 may obtain network data from one or more sources such as worker nodes 510. Telemetry collectors 542 may obtain network data such as service telemetry 544, network telemetry 545, and node telemetry 546. Telemetry collectors 542 may provide network data to analytics system 540 for analysis. Analytics system 540 may determine that one or more applications executing on worker nodes such as worker nodes 510 has fallen below a threshold of performance. Analytics system 540 may provide indications of degraded application performance to orchestrator 530 via interface 532 for processing by orchestrator 530.

In the example of FIG. 5, computing infrastructure 500 includes SD-WAN client 550 and SD-WAN controller 570. SD-WAN client 550 may enable orchestrator 530 to provide requests to modify WAN links to SD-WAN controller 570. SD-WAN client 550 may include one or more components such as dedicated network hardware (e.g., a network card in a server) or a software component of orchestrator 530 (e.g., an application plugin, an application interfacing with orchestrator 530, etc.).

SD-WAN controller 570 may contain or represent a Network Service Controller (NSC). SD-WAN controller 570 may manage SD-WAN edges to create and operate end-to-end SD-WAN managed services. Additionally, SD-WAN controller 570 may provide topology lifecycle management functionality. In some examples, SD-WAN controller 570 is a cloud-native SD-WAN controller implemented using workloads deployed by orchestrator 530. In some examples example, SD-WAN controller 570 may enable worker nodes 510 to communicate via WAN links of WAN 521 as an overlay on top of traditional WAN access, making use of the above or other WAN connection types. Additional information of an example SD-WAN controller 570, virtual router, and virtual router agent is found in United States Patent Number 11,381,474, granted July 5, 2022, and entitled "WAN LINK SELECTION FOR SD-WAN SERVICES" which is incorporated by reference as if fully set forth herein.

Different enterprise applications in Kubernetes may require connectivity from WAN 521 for reliable operation with strict QoS requirement for communication among different worker nodes 510 interconnected via WAN 521. SD-WAN controller 570 may enable cloud native application to provision SD-WAN with the dedicated traffic policies to meet their QoS requirements.

Analytics system 540, based on data collected by telemetry collectors 542 and QoS requirements of one or more applications having workloads such workloads 522 scheduled to worker nodes 510, may determine that one or more QoS requirements of the one or more applications are not being met. Analytics system 540 may receive QoS requirements for one or more applications that define one or more performance metrics that are required to be met by an application. Analytics system 540, based on the determination, may provide an indication to orchestrator 530 to re-schedule the workload of workloads 522. Orchestrator 530, based on the indication, may cause scheduler 548 to re-schedule the workload based on the QoS requirements.

Analytics system 540, based on determining that one or more Quality of Service (QoS) requirements are not met for a workload of an application placed to a first worker node such as worker node 510A, may identify a correlation between the placement of the workload of the application to worker node 510A, provisioned WAN links of WAN 521 in a SD-WAN to the first worker node, and the determination that one or more QoS requirements are not met. Analytics system 140 may provide an indication to orchestrator 530 of the determination for orchestrator 530 to re-provision, based on the correlation and the one or more QoS requirements, the WAN links to worker node 510A. Orchestrator 530 may cause SD-WAN controller 570 to re-provision WAN links of WAN 521 to worker node 510A.

Orchestrator 530 may communicate with SD-WAN controller 570 through SD-WAN client 550. Orchestrator 530 may use application performance visibility in a Kubernetes environment to continuously monitor QoS received by an application and use that as an input to SD-WAN controller 570 to actuate the existing network policies in their SD-WAN environments. Due to the highly dynamic nature of pod assignments in a Kubernetes cluster, SD-WAN controller 570 may be required to dynamically provision WAN links of an SD-WAN on demand. Whenever a pod such as one of workloads 522 is reassigned to a different worker node such as one of worker nodes 510, orchestrator 530 using SD-WAN client 550 may direct SD-WAN controller 570 to update/re-provision WAN links within WAN 521 to meet the QoS. SD-WAN controller 570 includes an interface by which SD-WAN client 550 may request configuration or re-provisioning of WAN links across WAN 521 to interconnect workloads 510 over WAN 521.

SD-WAN controller 570 may create and manage links between worker nodes 510 across WAN 521 based on requests from orchestrator 530 using SD-WAN client 550. For example, SD-WAN controller may provision WAN links to a workload based on a request to create the links from orchestrator 530. In some examples, orchestrator 530 may request that SD-WAN controller 570 re-provision WAN links to improve the reliability of a link between two of worker nodes 510 based on determining a workload has been re-scheduled to a geographically distributed worker node, and/or based on the identification of a correlation between the placement of application workloads to the two worker nodes and the degradation of application performance. In some examples, SD-WAN controller 570 may dynamically provision SD-WAN resources based on one or more considerations such as requests to re-provision SD-WAN resources from orchestrator 530 as well as in response to the scheduling of workloads to worker nodes 510, depending on the location of such worker nodes 510. SD-WAN controller 570 may provision links between worker nodes 510 to enable worker nodes of worker nodes 510 that are geographically distributed to communicate among themselves.

Orchestrator 530 may use SD-WAN controller 570 to re-provision SD-WAN resources to worker nodes. Orchestrator 530, based on an indication of a correlation between application performance and/or the placement of a workload on a worker node, may request the re-provisioning of SD-WAN resources (e.g., WAN links or updating an SD-WAN policy to modify use of WAN links for traffic to/from the worker node) by SD-WAN controller 570 to the worker node. Orchestrator 530 may provide an indication to SD-WAN client 550 of orchestrator 530 to output the request to SD-WAN controller 570.

SD-WAN controller 570, based on the request to provision WAN links from orchestrator 530 via SD-WAN client 550, may assign WAN links across WAN 521 to worker nodes 510 according to one or more requirements such as QoS or minimum Quality of Experience (QoE) metrics. The QoS and/or QoE metrics may include metrics such as maximum latency, maximum RTT, minimum bandwidth, and other metrics. Users may expect their applications to experience connectivity having an acceptable level of quality, commonly referred to as Quality of Experience (QoE) and QoS. The QoE/QoS may be measured based on various performance metrics of a link, including latency, delay (inter frame gap), jitter, packet loss, and/or throughput. The user may define desired levels for one or more of the metrics for the QoE/QoS that the users expect in service contracts, e.g., service level agreements (SLAs), with the service provider. SLA metrics are often user configurable values and are derived through trial-and-error methodologies or benchmark test environment versus user experience or realistic best application metrics.

UI device 529 may enable admin 528 to request the rescheduling of one or more workloads 522 among worker nodes 510. In addition, UI device 529 may enable admin 529 to request the re-provisioning of WAN links among worker nodes 510 by SD-WAN controller 570.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage media comprising instructions that, when executed, cause one or more processors to perform one or more of the methods described above. For example, the computer-readable data storage media may store such instructions for execution by one or more processors.

A computer-readable medium may form part of a computer program product, which may include packaging materials. A computer-readable medium may comprise a computer data storage medium such as random-access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. Computer-readable storage media may be distributed among multiple packages, devices, or other components capable of being configured with computer instructions.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there has now been described a method comprising establishing, by a computing system, an application performance baseline for an application based on application performance data and network telemetry data. Based on determining that application performance has degraded from the application performance baseline, the method comprises identifying, by the computing system, a correlation between a placement of a workload of the application to a first worker node of a plurality of worker nodes and the application performance data, and based on identifying the correlation, re-scheduling, by the computing system, the workload to a second worker node of the plurality of worker nodes.

Further examples of feature combinations taught by the present disclosure are set out in the following numbered clauses:
1. A method comprising:
   establishing, by a computing system, an application performance baseline for an application based on application performance data and network telemetry data;
   based on determining that application performance has degraded from the application performance baseline, identifying, by the computing system, a correlation between a placement of a workload of the application to a first worker node of a plurality of worker nodes and the application performance data; and based on identifying the correlation, re-scheduling, by the computing system, the workload to a second worker node of the plurality of worker nodes.
2. The method of clause 1, wherein network telemetry data includes at least one of:
   available bandwidth;
   network link utilization;
   per-hop latency among the plurality of worker nodes;
   historical network telemetry data;
   node latency;
   node packet loss; or
   node jitter.
3. The method of any of clauses 1-2, wherein the computing system identifies the correlation based at least on one of:
   communication dependencies between the plurality of worker nodes;
   network data from service mesh telemetry;
   end-to-end network paths among the plurality of worker nodes;
   network data from the plurality of worker nodes;
   network data from a probe of connections used by the plurality of worker nodes; or
   network data from network elements of a network that interconnects the plurality of worker nodes.
4. The method of any of clauses 1-3, further comprising:
   obtaining, by the computing system, data regarding network performance of the plurality of worker nodes of the network;
   identifying, by the computing system, worker nodes of the plurality of worker nodes that are executing any workload of the application; and
   determining, by the computing system and based on the data regarding network performance and the identified worker nodes, a degraded network performance of the application caused by the network performance of the identified worker nodes,
   wherein the re-scheduling is based on the determined degraded network performance of the application.
5. The method of clause 4, further comprising:
   establishing, by the computing system, a network performance baseline for the plurality of worker nodes, wherein identifying the correlation is based at least in part on the data regarding network performance and the network performance baseline.
6. The method of clause 4, further comprising:
   obtaining, by the computing system, data regarding intermediate connections between the plurality of worker nodes; and
   determining, by the computing system and based on the intermediate connections and based on the data regarding network performance of the plurality of worker nodes, a degraded network performance of the application caused by network performance of the intermediate connections between the plurality of worker nodes, and
   wherein the re-scheduling is based on the determined degraded network performance of the application caused by the network performance of the intermediate connections.
7. The method of any of clauses 1-6, further comprising:
   obtaining, by the computing system, quality of service (QoS) requirements for the workload of the application; and
   determining, by the computing system, that the QoS requirements of the workload are not met,
   wherein re-scheduling includes re-scheduling the workload based on the QoS requirements.
8. The method of any of clauses 1-7, wherein re-scheduling the workload comprises re-scheduling the workload based on determining the workload of the application is a critical workload.
9. The method of any of clauses 1-8, further comprising:
   determining, by the computing system, that a non-critical workload of the application is deployed to a worker node, of the plurality of worker nodes, having degraded network performance;
   determining, by the computing system, the absence of a correlation between the placement of the non-critical workload and the application performance data; and
   keeping, by the computing system, the non-critical workload as scheduled to the worker node with degraded network performance.
10. The method of any of clauses 1-9, wherein the correlation is a first correlation, and comprising:
   obtaining, by the computing system, indicators of dependencies between a plurality of resources in the network and event dependencies between a plurality of network events and one or more of the plurality of resources;
   receiving, by the computing system, an indication of a fault in the network;
   based on identifying that application performance has degraded from the application performance baseline, identifying, by the computing system, a second correlation between the fault, a placement of a second workload to a third worker node, and the application performance data; and
   wherein re-scheduling comprises re-scheduling based on the second correlation.
11. The method of any of clauses 1-10, further comprising:
   by the computing system, based on the re-scheduling and determining that one or more Quality of Service (QoS) requirements for the application is not met by a wide area network (WAN) link that interconnects at least two of the plurality of worker nodes, the at least two of the plurality of worker nodes including the first worker node, outputting a request to a software-defined networking in a WAN (SD-WAN) controller to configure an SD-WAN to transport traffic associated with the first worker node using a WAN link that satisfies the QoS requirements for the application.
12. A computing system, comprising one or more storage devices and one or more programmable processors in communication with the one or more storage devices and configured to:
   establish an application performance baseline for an application based on application performance data and network telemetry data;
   based on a determination that application performance has degraded from the application performance baseline, identify a correlation between a placement of a workload of the application to a first worker node of a plurality of worker nodes and the application performance data; and
   based on the identification of the correlation, re-schedule the workload to a second worker node of the plurality of worker nodes.
13. The computing system of clause 12, wherein the one or more programmable processors are configured to:
   obtain data regarding network performance of the plurality of worker nodes of the network;
   identify worker nodes of the plurality of worker nodes that are executing any workload of the application; and
   determine, based on the data regarding network performance and the identified worker nodes, a degraded network performance of the application caused by the network performance of the identified worker nodes,
   wherein to re-schedule the workload the one or more programmable processors are configured to re-schedule the workload based on the determined degraded network performance of the application.
14. The computing system of clause 13, wherein the one or more programmable processors are configured to:
   establish a network performance baseline for the plurality of worker nodes,
   wherein to identify the correlation the one or more programmable processors are configured to identify the correlation based at least in part on the data regarding network performance and the network performance baseline.
15. The computing system of clause 13, wherein the one or more programmable processors are configured to:
   obtain data regarding intermediate connections between the plurality of worker nodes; and
   determine, based on the intermediate connections and based on the data regarding network performance of the plurality of worker nodes, a degraded network performance of the application caused by network performance of the intermediate connections between the plurality of worker nodes, and
   wherein to re-schedule the workload the one or more programmable processors are configured to re-schedule the workload based on the determined degraded network performance of the application caused by the network performance of the intermediate connections.
16. The computing system of any of clauses 12-15, wherein the one or more programmable processors are configured to:
   obtain quality of service (QoS) requirements for the workload of the application; and
   determine that the QoS requirements of the workload are not met,
   wherein to re-schedule the workload the one or more programmable processors are configured to re-schedule the workload based on the QoS requirements.
17. The computing system of any of clauses 12-16, wherein to re-schedule the workload the one or more programmable processors are configured to re-schedule the workload based on a determination the workload of the application is a critical workload.
18. The computing system of any of clauses 12-17,
   wherein the correlation is a first correlation, and
   wherein the one or more programmable processors are configured to:
      obtain indicators of dependencies between a plurality of resources in the network and event dependencies between a plurality of network events and one or more of the plurality of resources;
      receive an indication of a fault in the network; and
      based on the determination that application performance has degraded from the application performance baseline, identify a second correlation between the fault, a placement of a second workload to a third worker node, and the application performance data;
      wherein to re-schedule the workload the one or more programable processors are configured to re-schedule the workload based on the second correlation.
19. The computing system of any of clauses 12-18, wherein the one or more programmable processors are configured to:
   based on a determination that one or more Quality of Service (QoS) requirements are not met for the workload of the application placed to the first worker node, identify a correlation between the placement of the workload of the application to the first worker node, provisioned wide area network (WAN) links in a software-defined WAN (SD-WAN) to the first worker node, and the determination that one or more QoS requirements are not met; and
   re-provision, based on the correlation and the one or more QoS requirements, the WAN links to the first worker node.
20. Computer-readable media comprising instructions that, when executed, configure one or more processors to:
   establish an application performance baseline for an application based on application performance data and network telemetry data;
   based on a determination that application performance has degraded from the application performance baseline, identify a correlation between a placement of a workload of the application to a first worker node of a plurality of worker nodes and the application performance data; and
   based on the identification of the correlation, re-schedule the workload to a second worker node of the plurality of worker nodes.

## Claims

1. A computing system, comprising one or more storage devices and one or more programmable processors in communication with the one or more storage devices and configured to:
establish an application performance baseline for an application based on application performance data and network telemetry data;
based on a determination that application performance has degraded from the application performance baseline, identify a correlation between a placement of a workload of the application to a first worker node of a plurality of worker nodes and the application performance data; and
based on the identification of the correlation, re-schedule the workload to a second worker node of the plurality of worker nodes.

2. The computing system of claim 1, wherein the network telemetry data includes at least one of:
available bandwidth;
network link utilization;
per-hop latency among the plurality of worker nodes;
historical network telemetry data;
node latency;
node packet loss; or
node jitter.

3. The computing system of any of claims 1-2, wherein the one or more programmable processors are configured to identify the correlation based on at least one of:
communication dependencies between the plurality of worker nodes;
network data from service mesh telemetry;
end-to-end network paths among the plurality of worker nodes;
network data from the plurality of worker nodes;
network data from a probe of connections used by the plurality of worker nodes; or
network data from network elements of a network that interconnects the plurality of worker nodes.

4. The computing system of any of claims 1-3, wherein the one or more programmable processors are configured to:
obtain data regarding network performance of the plurality of worker nodes of the network;
identify worker nodes of the plurality of worker nodes that are executing any workload of the application; and
determine, based on the data regarding network performance and the identified worker nodes, a degraded network performance of the application caused by the network performance of the identified worker nodes,
wherein to re-schedule the workload the one or more programmable processors are configured to re-schedule the workload based on the determined degraded network performance of the application.

5. The computing system of claim 4, wherein the one or more programmable processors are configured to:
establish a network performance baseline for the plurality of worker nodes,
wherein to identify the correlation the one or more programmable processors are configured to identify the correlation based at least in part on the data regarding network performance and the network performance baseline.

6. The computing system of claim 4, wherein the one or more programmable processors are configured to:
obtain data regarding intermediate connections between the plurality of worker nodes; and
determine, based on the intermediate connections and based on the data regarding network performance of the plurality of worker nodes, a degraded network performance of the application caused by network performance of the intermediate connections between the plurality of worker nodes, and
wherein to re-schedule the workload the one or more programmable processors are configured to re-schedule the workload based on the determined degraded network performance of the application caused by the network performance of the intermediate connections.

7. The computing system of any of claims 1-6, wherein the one or more programmable processors are configured to:
obtain quality of service, QoS, requirements for the workload of the application; and
determine that the QoS requirements of the workload are not met,
wherein to re-schedule the workload the one or more programmable processors are configured to re-schedule the workload based on the QoS requirements.

8. The computing system of any of claims 1-7, wherein to re-schedule the workload the one or more programmable processors are configured to re-schedule the workload based on a determination the workload of the application is a critical workload.

9. The computing system of any of claims 1-8, wherein the one or more programmable processors are further configured to:
determine that a non-critical workload of the application is deployed to a worker node, of the plurality of worker nodes, having degraded network performance;
determine the absence of a correlation between the placement of the non-critical workload and the application performance data; and
keep the non-critical workload as scheduled to the worker node with degraded network performance.

10. The computing system of any of claims 1-9,
wherein the correlation is a first correlation, and
wherein the one or more programmable processors are configured to:
obtain indicators of dependencies between a plurality of resources in the network and event dependencies between a plurality of network events and one or more of the plurality of resources;
receive an indication of a fault in the network; and
based on the determination that application performance has degraded from the application performance baseline, identify a second correlation between the fault, a placement of a second workload to a third worker node, and the application performance data;
wherein to re-schedule the workload the one or more programable processors are configured to re-schedule the workload based on the second correlation.

11. The computing system of any of claims 1-10, wherein the one or more programmable processors are configured to:
based on a determination that one or more Quality of Service, QoS, requirements are not met for the workload of the application placed to the first worker node, identify a correlation between the placement of the workload of the application to the first worker node, provisioned wide area network, WAN, links in a software-defined WAN, SD-WAN, to the first worker node, and the determination that one or more QoS requirements are not met; and
re-provision, based on the correlation and the one or more QoS requirements, the WAN links to the first worker node.

12. A method as performed by any of the computing systems of claims 1-11.

13. Computer-readable media encoded with instructions for causing one or more programmable processors to become configured as the computing system of any of claims 1-11 or to become configured to carry out the method claim 12.
